# EUROPEAN PATENT SPECIFICATION

(11) **EP 2 235 784 B1**
(45) Date of publication and mention of the grant of the patent: **08.02.2012**
(21) Application number: 08865252.4
(22) Date of filing: 19.12.2008
(51) Int. Cl.: H01M 10/0565

(54) **ELECTROLYTE FOR LITHIUM POLYMER BATTERIES**
ELEKTROLYT FÜR LITHIUMPOLYMERBATTERIEN
ÉLECTROLYTE POUR BATTERIES LITHIUM-POLYMÈRE

(30) Priority: 21.12.2007 US 15906
(43) Date of publication of application: 06.10.2010
(73) Proprietor: Bathium Canada Inc., Boucherville, QC J4B 7Z7 (CA)
(72) Inventor: COTTON, Frederic, Montreal, Quebec H2A 3K5 (CA); GUENA, Thierry, Longueuil QUEBEC J4G 1Z7 (CA); LEBLANC, Patrick, Boucherville, Quebec J4B 8K5 (CA); VALLEE, Alain, Varennes, Quebec J3X 2A2 (CA); DESCHAMPS, Marc, F-29000 Quimper (FR)
(74) Representative: Oudin, Stéphane
(86) International application number: PCT/CA2008/002195
(87) International publication number: WO 2009/079757

(56) References cited:
- US-A- 5 429 891
- US-A- 6 159 638
- US-B1- 6 355 380
- US-B1- 6 645 675
- JACOB ET AL.: 'Effect ofPEO addition on the electrolytic and thermal properties of PVDF-LiClO4 polymer electrolytes' SOLID STATE IONICS vol. 104, 1997, pages 267 - 276
- DATABASE WPI Derwent Publications Ltd., London, GB; AN 2004-337988 & KR 2003 0 086 664 A 12 November 2003
- STEPHAN ET AL.: 'Review on composite polymer electrolytes for lithium batteries' POLYMER vol. 47, no. ISS.16, 26 July 2006, pages 5952 - 5964

## Description

### FIELD OF THE INVENTION

The present invention relates to a solid polymer electrolyte for lithium batteries and more specifically to a polymer electrolyte which has increased mechanical resistance.

### BACKGROUND OF THE INVENTION

A lithium battery using a lithium metal as a negative electrode has excellent energy density. However, with repeated cycles, such a battery can be subject to dendrites' growths on the surface of the lithium metal electrode when recharging the battery as the lithium ions are unevenly re-plated on surface of the lithium metal electrode. To minimize the effect of the morphological evolution of the surface of the lithium metal anode including dendrites growth, a lithium metal battery typically uses a solid polymer electrolyte as described in US Pat. No. 6,007,935 which is herein incorporated by reference. Over numerous cycles, the dendrites on the surface of the lithium metal anode may still grow to penetrate the electrolyte even though the electrolyte is solid and cause 'soft' short circuits between the negative electrode and the positive electrode, resulting in decreasing or poor performance of the battery. Therefore, the growth of dendrites may still deteriorate the cycling characteristics of the battery and constitutes a major limitation with respect to the optimization of the performances of lithium batteries having a metallic lithium anode.

Thus, there is a need for a solid electrolyte with increased mechanical strength which is also adapted to reduce or inhibit the effect of the growth of dendrites on the surface of the metallic lithium anode.

### STATEMENT OF THE INVENTION

One aspect of the present invention is to provide a solid polymer electrolyte for a battery according to claim 1, the solid polymer electrolyte including a first polymer capable of solvating a lithium salt, a lithium salt, and a second polymer which is at least partially miscible with the first polymer or rendered at least partially miscible with the first polymer; at least a portion the second polymer being crystalline or vitreous at an internal operating temperature of the battery.

In one aspect of the invention, the second polymer is rendered miscible with the first polymer through a compatibilizer.

Another aspect of the invention is to provide a battery having a plurality of electrochemical cells, each electrochemical cell including a metallic lithium anode, a cathode, and a solid polymer electrolyte positioned between the anode and the cathode, the solid polymer electrolyte including a first polymer capable of solvating a lithium salt, a lithium salt, and a second polymer which is at least partially miscible with the first polymer or rendered at least partially miscible with the first polymer; at least a portion of the second polymer being crystalline or vitreous at an internal operating temperature of the battery, the second polymer remaining crystalline or vitreous in the solid polymer electrolyte thereby increasing the mechanical strength of the solid polymer electrolyte to resist growth of dendrites on the surface of the metallic lithium anode.

Embodiments of the present invention each have at least one of the above-mentioned objects and/or aspects, but do not necessarily have all of them. It should be understood that some aspects of the present invention that have resulted from attempting to attain the above-mentioned objects may not satisfy these objects and/or may satisfy other objects not specifically recited herein.

Additional and/or alternative features, aspects and advantages of the embodiments of the present invention will become apparent from the following description, the accompanying drawings and the appended claims.

### BRIEF DESCRIPTION OF THE DRAWINGS

For a better understanding of the present invention as well as other aspects and further features thereof, reference is made to the following description which is to be used in conjunction with the accompanying drawings, where:

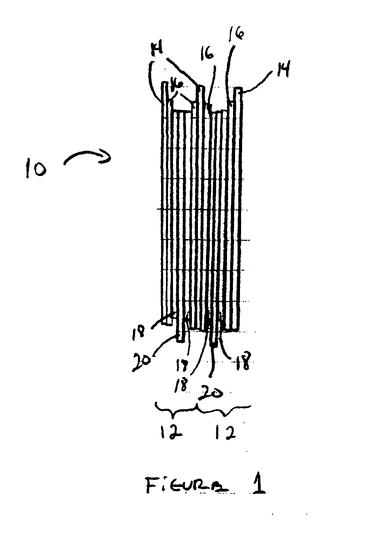

FIG. 1 is a schematic representation of a plurality of electrochemical cells forming a lithium metal polymer battery.

### DESCRIPTION OF PREFERRED EMBODIMENT(S)

Figure 1 illustrates schematically a lithium metal polymer battery 10 having a plurality of electrochemical cells 12 each including an anode or negative electrode 14 made of a sheet of metallic lithium, a solid electrolyte 16 and a cathode or positive electrode film 18 layered onto a current collector 20. The solid electrolyte 16 typically includes a lithium salt to provide ionic conduction between the anode 14 and the cathode 18. The sheet of lithium metal typically has a thickness ranging from 20 microns to 100 microns; the solid electrolyte 16 has a thickness ranging from 10 microns to 50 microns, and the positive electrode film 18 typically has a thickness ranging from 20 microns to 100 microns.

The internal operating temperature of the battery 10 in the electrochemical cells 12 is typically between 40 °C and 100 °C. Lithium polymer batteries preferably include an internal heating system to bring the electrochemical cells 12 to their optimal operating temperature. The battery 10 may be used indoors or outdoors in a wide temperature range (between -40 °C to +70 °C).

The solid polymer electrolyte 16 according to the invention is composed of a blend of at least two polymers and a lithium salt. A first polymer having the ability to dissolve the lithium salt to form a conductive medium for lithium ions migrating between the anode 14 and the cathode 18 such as for example polymers of the polyether family which includes polyethylene oxide (PEO), polypropylene oxide (PPO), polybutylene oxide (PBO) and so on, and copolymers comprising or including one of these polymers. The first polymer is preferably a polyethylene oxide (PEO) based polymer or copolymer. The first polymer can be in a solid, or gel state in the electrolyte. The second polymer is at least partially miscible with the first polymer or rendered at least partially miscible with the first polymer through a comptatibilizing agent so that the two polymers form a phase in the electrolyte where the polymer chains of both of them are entangled at the molecular level. The role of the second polymer is to increase the mechanical resistance of the solid electrolyte 16 to the growth of lithium dendrites on the surface of the sheet of Lithium metal. The second polymer may be non-solvating to the lithium salt since the first polymer is adapted to solvate the lithium salt.

The solid polymer electrolyte 16 is stronger than prior art solid polymer electrolytes and may therefore be made thinner than prior art polymer electrolytes. As outlined above the solid polymer electrolyte 16 may be as thin as 10 microns. A thinner electrolyte in a battery results in a lighter battery and therefore a battery having a higher energy density. The increased strength of the blend of polymers may also render the solid polymer electrolyte 16 more stable in processes. The solid polymer electrolyte 16 is more tear resistant and may be less likely to wrinkle in the production process. The adhesion properties of the solid polymer electrolyte 16 may be adjusted with the ratio of the constituents of the blend (first and second polymer and lithium salt) to improve the processing of the solid polymer electrolyte and the manufacturing of the battery.

The second polymer may be crystalline (or partially crystalline) or vitreous. In the case where the second polymer is crystalline such as polyvinylidene fluoride co-hexafluoropropylene (PVDF-HFP), its melt temperature must be higher than the internal operating temperature of the battery. PVDF-HFP copolymers have a melt temperature of about 135 °C. In the blend of the first polymer and the second polymer, portions of the molecules of the second polymer are able to form crystallites which are dispersed in the miscible phase of the electrolyte and remain crystalline even at the internal operating temperature of the battery which is between 40 °C and 100 °C. These crystallites provide strength to the solid electrolyte 16 and improve the mechanical resistance of the solid electrolyte 16. In a battery having a metallic lithium anode, the solid electrolyte 16 is more resistant to the growth of lithium dendrites and more specifically the polymer blend of the solid electrolyte 16 improve the resistance of the solid electrolyte 16 to penetration or perforation by the dendrites' growth on the surface of the metallic lithium anode.

The PVDF-HFP co-polymers are not miscible with the polymers of the polyether family such as PEO. However, the presence of lithium salts which acts as a compatibilizer between the PVDF-HFP co-polymer and the polyether polymer renders the PVDF-HFP co-polymer partially miscible with the polyether polymer in the solid polymer electrolyte. In one preferred embodiment of the solid polymer electrolyte 16, PEO, PVDF-HFP and lithium salt are mixed in a ratio of between 30%/W and 70%/W of PEO, between 20%/W and 60%/W of PVDF-HFP and between 10%/W and 25%/W of lithium salt. For example, the solid polymer electrolyte 16 blend may consist of 55%/W PEO, 30%/W PVDF-HFP and 15%/W lithium salt. In the blend of PEO and PVDF-HFP, clusters of the molecules of PVDF-HFP form crystallites which are dispersed in the miscible phase of the electrolyte and remain crystalline at the internal operating temperature of the battery.

During the manufacturing process of the solid polymer electrolyte including polyether such as PEO and PVDF-HFP, it has been found that the introduction of the lithium salt after the polyether and PVDF-HFP have been mixed together enables the PVDF-HFP to remain more crystalline and form larger crystallites which increase the mechanical strength of the solid polymer electrolyte 16.

Compatibilizers are compounds that are able to link non-miscible compounds by providing a bridge between the otherwise non-miscible compounds such as polyethers and PVDF-HFP to form at least one homogenous domain containing both polymers.

In the case where the second polymer is vitreous (i.e. glassy) such as polymethylmethacrylate (PMMA), its glass transition temperature must be higher than the operating temperature of the battery. The PMMA polymer has a glass transition temperature of about 115 °C and is completely miscible with polymers of the polyether family such as PEO resulting in a homogenous blend. However, the molecules of PMMA remain in their vitreous state in the solid polymer electrolyte at the internal operating temperature of the battery. The chains of molecules of PMMA remaining in their vitreous state are dispersed in the miscible phase of the homogenous blend of polyether-PMMA and provide added strength to the solid polymer electrolyte 16 and improve its mechanical resistance. In a battery having a metallic lithium anode, the solid polymer electrolyte 16 is more resistant to the growth of lithium dendrites and more specifically to penetration or perforation by the dendrites' growth on the surface of the metallic lithium anode. The chains of molecules of PMMA remaining in their vitreous state dispersed in the miscible phase of the homogenous blend provide a stronger barrier to dendrites' growth than prior art polyether based electrolytes. In one preferred embodiment of the solid polymer electrolyte 16, PEO, PMMA and lithium salt are mixed in a ratio of between 45%/W and 80%/W of PEO, between 10%/W and 30%/W of PMMA and between 10%/W and 25%/W of lithium salt. For example, the solid polymer electrolyte 16 blend may consist of 70%/W PEO, 15%/W PMMA and 15 %/W lithium salt.

The second polymer is not necessarily mechanically stronger than the first polymer. It is the ability of the second polymer to remain crystalline or vitreous, depending on the case, at the internal operating temperature of the battery that improves the mechanical strength of the solid polymer electrolyte 16 and more specifically the resistance of the solid polymer electrolyte 16 to penetration or perforation by dendrites' growths. While the first polymer softens at the internal operating temperature of the battery, the second polymer remains crystalline or vitreous.

In general, the specific ratio of the first polymer and the lithium salt in the solid polymer electrolyte is tailored as a function of the desired electrochemical performance of the battery being produced.

The solid polymer electrolyte 16 may also consists of a first polymer having the ability to dissolve the lithium salt to form a conductive medium for the lithium ions migrating between the anode 14 and the cathode 18 such as polymers of the polyether family which includes polyethylene oxide (PEO), and a second and third polymer, at least one of which remaining crystalline or vitreous, depending on the case, at the internal operating temperature of the battery. For example, a solid polymer electrolyte may be prepared with a polyether blended with a second polymer consisting of PVDF-HFP and a third polymer consisting of PMMA. In this particular case, the second polymer remains crystalline and third polymer remains vitreous at the internal operating temperature of the battery thereby improving the mechanical strength of the solid polymer electrolyte 16 and more specifically the resistance of the solid polymer electrolyte 16 to penetration or perforation by dendrites' growths. In one specific embodiment of the solid polymer electrolyte 16, PEO, PVDF-HFP, PMMA and lithium salt are mixed in a ratio of between 30%/W and 60 %/W of PEO, between 15%/W and 40%/W of PVDF-HFP, between 5%/W and 20%/W of PMMA and between 10%/W and 25 %/W of lithium salt. For example, the solid polymer electrolyte 16 blend may consist of 50%/W PEO, 20%/W PVDF-HFP, 15%/W PMMA and 15%/W lithium salt.

In each embodiment, the resulting solid polymer electrolyte 16 has a Young modulus ranging from 2 MPa (290 psi) to 5 MPa (725 psi). By comparison, a polyether based electrolyte typically has a Young modulus ranging from 0.5 MPa (725 psi) to 1 MPa (145 psi).

Inorganic charges such as silica and/or a metal oxide such as magnesium oxide may also be added to the polymeric electrolyte-lithium salt mixtures in order to enhance the mechanical properties of the solid electrolyte. The inorganic charges may also improve the ionic conductivity of the solid electrolyte. Up to 10% by volume of inorganic charges may be added to the polymeric electrolyte-lithium salt mixtures.

The electrolyte can be manufactured by dissolution of the two or more polymers and the lithium salt in a common solvent, or mix of solvents. The solvent or mix of solvents is thereafter removed from the electrolyte prior to assembly into the electrochemical cells 12 of the battery 10 to form a solid polymer electrolyte. The electrolyte can also be made by blending in the melt state of the constituents of the electrolyte (polymers and/or copolymers and lithium salt) in any mixing device such as extruders or kneaders and the like.

Modifications and improvement to the above described embodiments of the present invention may become apparent to those skilled in the art. The foregoing description is intended to be exemplary rather than limiting. Furthermore, the dimensions of features of various components that may appear on the drawings are not meant to be limiting, and the size of the components therein can vary from the size that may be portrayed in the figures herein. The scope of the present invention is therefore intended to be limited solely by the scope of the appended claims.

## Claims

1. A solid polymer electrolyte for a battery, the solid polymer electrolyte including a first polymer capable of solvating a lithium salt selected from the group consisting of polyethylene oxide (PEO), polypropylene oxide (PPO), polybutylene oxide (PBO) and copolymers thereof, a lithium salt, and a second polymer consisting of polyvinylidene fluoride co-hexafluoropropylene (PVDF-HFP) copolymer which is at least partially miscible with the first polymer or rendered at least partially miscible with the first polymer; at least a portion of the second polymer remaining crystalline at an internal operating temperature of the battery and a third polymer consisting of polymethylmethacrylate (PMMA).

2. A solid polymer electrolyte as defined in claim 1, wherein at least a portion the second polymer remaining crystalline in the solid polymer electrolyte is dispersed in a miscible phase of the solid polymer electrolyte.

3. A solid polymer electrolyte as defined in claim 1 or 2, further comprising inorganic charges selected from the group consisting of silica and metal oxides.

4. A solid polymer electrolyte as defined in one of claims 1 to 3, wherein the solid polymer electrolyte has a Young modulus ranging from 2 MPa to 5 MPa.

5. A solid polymer electrolyte as defined in one of claims 1 to 4, wherein the second polymer is rendered miscible with the first polymer through said lithium salt.

6. A solid polymer electrolyte as defined in one of claims 1 to 7, wherein the third polymer is rendered miscible with the first polymer through the lithium salt.

7. A solid polymer electrolyte as defined in claim 1, wherein at least a portion the third polymer remaining vitreous in the solid polymer electrolyte is dispersed in a miscible phase of the solid polymer electrolyte.

## Patentansprüche

1. Fester Polymerelektrolyt für eine Batterie, wobei der feste Polymerelektrolyt ein erstes Polymer enthält, das dazu in der Lage ist, ein Lithiumsalz zu solvatisieren, ausgewählt aus der Gruppe bestehend aus Polyehtylenoxid (PEO), Polypropylenoxid (PPO), Polybutylenoxid (PBO) und Copolymeren davon, ein Lithiumsalz und ein zweites Polymer, bestehend aus Polyvinylidenfluoridcohexafluorpropylen(PVDF-HFP)-Copolymer, das mindestens teilweise mit dem ersten Polymer mischbar ist oder mindestens teilweise mit dem ersten Polymer mischbar gemacht wird; wobei mindestens ein Teil des zweiten Polymers bei einer internen Betriebstemperatur der Batterie kristallin bleibt und ein drittes Polymer aus Polymethylmethacrylat (PMMA) besteht.

2. Fester Polymerelektrolyt nach Anspruch 1, wobei mindestens ein Teil des zweiten Polymers, das im festen Polymerelektrolyt kristallin bleibt, in einer mischbaren Phase des festen Polymerelektrolyts dispergiert wird.

3. Fester Polymerelektrolyt nach Anspruch 1 oder 2, weiter umfassend anorganische Ladungen, ausgewählt aus der Gruppe bestehend aus Siliciumdioxid und Metalloxiden.

4. Fester Polymerelektrolyt nach einem der Ansprüche 1 bis 3, wobei der feste Polymerelektrolyt einen Young'schen Modul aufweist, der zwischen 2 MPa und 5 MPa liegt.

5. Fester Polymerelektrolyt nach einem der Ansprüche 1 bis 4, wobei das zweite Polymer durch das Lithiumsalz mit dem ersten Polymer mischbar gemacht wird.

6. Fester Polymerelektrolyt nach einem der Ansprüche 1 bis 7, wobei das dritte Polymer durch das Lithiumsalz mit dem ersten Polymer mischbar gemacht wird.

7. Fester Polymerelektrolyt nach Anspruch 1, wobei mindestens ein Teil des dritten Polymers, der im festen Polymerelektrolyt glasartig bleibt, in einer mischbaren Phase des festen Polymerelektrolyts dispergiert wird.

## Revendications

1. Electrolyte à polymère solide pour batterie, l'électrolyte à polymère solide comprenant un premier polymère capable de solvater un sel de lithium choisi dans le groupe constitué par un poly(oxyde d'éthylène) (PEO), un poly(oxyde de propylène) (PPO), un poly(oxyde de butylène) (PBO) et leurs copolymères, un sel de lithium et un deuxième polymère consistant en un copolymère de poly(fluorure de vinylidène)-hexafluoropropylène (PVDF-HFP) qui est au moins partiellement miscible au premier polymère ou rendu au moins partiellement miscible au premier polymère ; au moins une partie du deuxième polymère restant cristalline à une température interne de fonctionnement de la batterie et un troisième polymère consistant en un poly(méthacrylate de méthyle) (PMMA).

2. Electrolyte à polymère solide selon la revendication 1, dans lequel au moins une partie du deuxième polymère restant cristalline dans l'électrolyte à polymère solide est dispersée dans une phase miscible de l'électrolyte à polymère solide.

3. Electrolyte à polymère solide selon la revendication 1 ou 2, comprenant en outre des charges inorganiques choisies dans le groupe constitué par la silice et les oxydes métalliques.

4. Electrolyte à polymère solide selon l'une quelconque des revendications 1 à 3, dans lequel l'électrolyte à polymère solide présente un module de Young allant de 2 MPa à 5 MPa.

5. Electrolyte à polymère solide selon l'une quelconque des revendications 1 à 4, dans lequel le deuxième polymère est rendu miscible au premier polymère grâce audit sel de lithium.

6. Electrolyte à polymère solide selon l'une quelconque des revendications 1 à 7, dans lequel le troisième polymère est rendu miscible au premier polymère grâce au sel de lithium.

7. Electrolyte à polymère solide selon la revendication 1, dans lequel au moins une partie du troisième polymère restant vitreuse dans l'électrolyte à polymère solide est dispersée dans une phase miscible de l'électrolyte à polymère solide.
